(19) Europäisches Patentamt
European Patent Office
Office européen des brevets

(11) EP 4 563 667 A1

(12) **EUROPEAN PATENT APPLICATION**
published in accordance with Art. 153(4) EPC

(43) Date of publication:
**04.06.2025 Bulletin 2025/23**

(21) Application number: **23846317.8**

(22) Date of filing: **19.07.2023**

(51) International Patent Classification (IPC):
***C09D 133/14*** *(2006.01)* ***B05D 1/36*** *(2006.01)*
***B05D 7/24*** *(2006.01)* ***B32B 27/30*** *(2006.01)*
***C09D 7/63*** *(2018.01)* ***C09D 163/00*** *(2006.01)*
***C09D 183/04*** *(2006.01)* ***C09D 201/08*** *(2006.01)*

(52) Cooperative Patent Classification (CPC):
**B05D 1/36; B05D 7/24; B32B 27/30; C09D 7/63; C09D 133/14; C09D 163/00; C09D 183/04; C09D 201/08**

(86) International application number:
**PCT/JP2023/026380**

(87) International publication number:
**WO 2024/024586 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 JP 2022118949**

(71) Applicant: **Chugoku Marine Paints, Ltd.**
**Hiroshima 739-0652 (JP)**

(72) Inventors:
- **IWATA, Yuki**
**Otake-shi, Hiroshima 739-0652 (JP)**
- **WAKISAKA, Shingo**
**Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **COATING COMPOSITION**

(57) An embodiment of the present invention relates to a coating composition, a coating film, a laminated coating film-attached substrate, or a method for producing the same, and the coating composition contains a tertiary amino group-containing acrylic resin (A) and a carboxy group-containing resin (B), or contains a tertiary amino group and carboxy group-containing acrylic resin (AB), and contains an epoxy group-containing silane compound (C) and an epoxy resin (D) other than an epoxy group-containing acrylic resin.

EP 4 563 667 A1

## Description

### Technical Field

An embodiment of the present invention relates to a coating composition, a coating film, a laminated coating film-attached substrate, or a method for producing the same.

### Background Art

For (large) steel structures such as ships, bridges, tanks, plants, marine buoys, and pipelines, an undercoat coating film such as an epoxy resin-based anticorrosive coating composition is usually applied for the purpose of, for example, preventing corrosion, and then a topcoat coating composition is applied onto the formed undercoat coating film for the purpose of enhancing designability and weather resistance.

As the topcoat coating composition, a two-component reactive curable topcoat coating composition (example: an acrylic urethane resin-based coating composition or a fluorourethane resin-based coating composition) is known.

In such a conventional topcoat coating composition, a compound having an isocyanate group is contained or a compound having an isocyanate group is used at the stage of preparing the coating composition, and therefore it is desired to reduce the load on the human body and the environment during coating application and preparation of the coating composition.

For this reason, a topcoat coating composition free of compounds having an isocyanate group, specifically, a polysiloxane resin-based coating composition is also known as a topcoat coating composition in consideration of the human body and the environment during coating application.

The polysiloxane resin-based coating composition generally enables the formation of a coating film having a high coating film hardness, but it has been found that there is room for improvement in terms of balance between coating film hardness and bending resistance, weather resistance, and/or chemical resistance.

In this regard, as a coating composition enabling the formation of a coating film particularly excellent in, for example, weather resistance, Patent Literature 1 describes a coating composition containing a tertiary amino group-containing acrylic resin, a carboxy group-containing resin, and an epoxy group-containing silane compound.

### Citation List

#### Patent Literature

Patent Literature 1: JP 2021-155597 A

### Summary of Invention

When the coating composition described in Patent Literature 1 is used as a topcoat coating composition, the topcoat coating composition is formed on an undercoat coating film, but as a result of intensive studies by the present inventor, it has been found that the topcoat coating composition has room for improvement in adhesion to an epoxy resin-based undercoat coating film.

In addition, it is known that the appearance (designability) of a topcoat coating film formed on a substrate is deteriorated due to, for example, deterioration over time. As a method for improving the appearance of such a coating film (old coating film) having deteriorated appearance, it is conceivable to peel the old coating film and newly form a topcoat coating film. However, peeling of an old coating film and formation of a new topcoat coating film take time and effort, and thus a topcoat coating composition is newly applied directly onto the old coating film, particularly the same coating composition as the coating composition used for forming the old coating film is applied (hereinafter also referred to as "re-application to an old coating film").

As described above, it has been found that, when re-application to an old coating film is performed and a conventional topcoat coating composition is used, the adhesion between the old coating film and a coating film (new coating film) formed from the newly applied coating composition (hereinafter also referred to as "adhesion between an old coating film and a new coating film") is not sufficient.

An embodiment of the present invention provides a coating composition enabling the formation of a coating film which is excellent in weather resistance and curability, and also excellent in adhesion to an epoxy resin-based undercoat coating film and adhesion between an old coating film and a new coating film.

Solution to Problem

As a result of intensive studies on a method for solving the above problem, it has been found that the above problem can be solved with the following configuration example.
A configuration example of the present invention is as follows.
<1> A coating composition

containing a tertiary amino group-containing acrylic resin (A) and a carboxy group-containing resin (B), or containing a tertiary amino group and carboxy group-containing acrylic resin (AB), and
containing an epoxy group-containing silane compound (C) and an epoxy resin (D) other than an epoxy group-containing acrylic resin.

<2> The coating composition according to <1>, wherein a mass ratio of a content of the epoxy group-containing silane compound (C) to a content of the epoxy resin (D) (silane compound (C) content : epoxy resin (D) content) is 1 : 7 to 7 : 1.
<3> The coating composition according to <1> or <2>, further containing a silicone resin (E).
<4> The coating composition according to any one of <1> to <3>, wherein the coating composition is applied onto an epoxy resin-based undercoat coating film.
<5> A coating film formed from the coating composition according to any one of <1> to <4>.
<6> A laminated coating film-attached substrate including a substrate, an epoxy resin-based undercoat coating film, and the coating film according to <5> in this order.
<7> A method for producing a laminated coating film-attached substrate, including steps [1] and [2] below:

[1] a step of applying the coating composition according to any one of <1> to <4> to a substrate with an epoxy resin-based undercoat coating film formed thereon; and
[2] a step of drying the applied coating composition to form a coating film.

Advantageous Effects of Invention

According to an embodiment of the present invention, it is possible to form a coating film which is excellent in weather resistance and curability and also excellent in adhesion to an epoxy resin-based undercoat coating film and adhesion between an old coating film and a new coating film.
In addition, according to an embodiment of the present invention, it is possible to provide a weather-resistant coating composition that is curable at ambient temperature and has excellent drying property at low cost, and it is possible to form a coating film which is excellent in balance between coating film hardness and bending resistance and has excellent chemical resistance.
Further, according to an embodiment of the present invention, since a coating composition in which a compound having an isocyanate group harmful to the human body and the environment is not contained or used can be formed, a coating composition having low load on the human body and the environment during coating application and preparation of the coating composition can be formed.

Description of Embodiments

<<Coating composition>>

A coating composition according to an embodiment of the present invention (hereinafter also simply referred to as "present composition") is a coating composition containing a tertiary amino group-containing acrylic resin (A) and a carboxy group-containing resin (B), or contains a tertiary amino group and carboxy group-containing acrylic resin (AB), and contains an epoxy group-containing silane compound (C) and an epoxy resin (D) other than an epoxy group-containing acrylic resin.
That is, the present composition is

a coating composition containing a tertiary amino group-containing acrylic resin (A), a carboxy group-containing resin (B), an epoxy group-containing silane compound (C), and an epoxy resin (D) other than an epoxy group-containing acrylic resin (hereinafter also referred to as "composition 1"), or
a coating composition containing a tertiary amino group and carboxy group-containing acrylic resin (AB), an epoxy group-containing silane compound (C) and an epoxy resin (D) other than an epoxy group-containing acrylic resin

(hereinafter also referred to as "composition 2"). Among these, the composition 1 is preferable from the viewpoint that, for example, a coating film more excellent in weather resistance and curability can be easily formed.

Hereinafter, the tertiary amino group-containing acrylic resin (A) is also referred to as "component (A)". Other components are also referred to similarly.

The present composition can be easily cured even under conditions of ambient temperature drying, and enables the formation of a coating film excellent in weather resistance over a long period of time even in a severe environment where anticorrosive coating is applied.

Since the present composition is cured at ambient temperature, even if the substrate to be coated is a substrate having poor heat resistance (a substrate with a coating film having poor heat resistance formed thereon), the type of the substrate is not limited, and a coating film can be formed from the present composition. In addition, since the present composition enables the formation of a weather-resistant coating film having long-term weather resistance, the period until re-application can be lengthened, and the adhesion between an old coating film and a new coating film is excellent even when re-application to an old coating film is performed. Therefore, use of the present composition can greatly reduce the maintenance cost related to the coating application of a substrate such as a steel structure.

From the viewpoint of, for example, further exhibiting the effect, the present composition is usually preferably applied to the outermost surface of the substrate (surface opposite to the substrate) as a topcoat coating composition, particularly as a coating composition (topcoat coating composition) applied onto an epoxy resin-based undercoat coating film. In addition, the present composition can also be used as an intermediate and topcoat coating material that serves as both an intermediate-coat coating material and a topcoat coating material.

The present composition may be a waterborne coating material in consideration of, for example, the load on the human body and the environment, but is preferably a solvent-based coating material from the viewpoint that, for example, the drying property and curability in a low temperature environment (for example, 5°C or lower) tend to be insufficient.

When the present composition contains water, the content thereof is preferably 5 mass% or less, more preferably less than 3.5 mass%, and still more preferably 3 mass% or less with respect to 100 mass% of the nonvolatile content of the present composition, and the lower limit thereof is not particularly limited, and is, for example, 0.1 mass% or more.

The present composition may be a one-component type composition, but in consideration of storage stability and ease of storage, the present composition is preferably a multi-component type composition including a base component and a curing agent, and is desirably, for example, a two-component type composition that includes a base component containing the components (A) and (B) or a base component containing the component (AB) and that includes a curing agent containing the components (C) and (D). In addition, the present composition may be a three or more-component type composition including, for example, a third agent other than the base component and the curing agent.

The base component and the curing agent, and/or the third agent are usually, for example, preserved, stored, and transported in separate containers, and then used by being mixed together immediately before use.

<Tertiary amino group-containing acrylic resin (A)>

The component (A) is a resin other than the component (B) and the component (AB), that is, a resin free of carboxy groups, and is not particularly limited as long as it has at least one tertiary amino group in one molecule.

When the component (A) contains a tertiary amino group, the reaction between the component (B) and the component (C) and/or the component (D) can be promoted.

As the component (A) used in the present composition, one type or two or more types may be used.

The "acrylic resin" in the present description refers to an acrylic resin and a methacrylic resin. The term "(meth) acrylic" is a general term for acrylic and methacrylic. Similar expressions have similar meanings.

The component (A) can be synthesized, for example, through (co)polymerization by a known method using a tertiary amino group-containing unsaturated monomer (a-1), and specifically, can be synthesized by radically (co) polymerizing the tertiary amino group-containing unsaturated monomer (a-1) and, if necessary, another unsaturated monomer (a-2). However, at least one of the monomers used for the (co)polymerization is a compound having a (meth) acryloyl group.

In addition, the component (A) may be synthesized by radically (co)polymerizing another unsaturated monomer (a-2) (however, as at least one of the monomers (a-2), a compound having a (meth)acryloyl group is used) and then performing, for example, modification so that the finally obtained resin has a tertiary amino group.

The component (A) can be synthesized by a conventional method, and specifically can be synthesized by allowing a monomer to react in the presence of a polymerization initiator and a solvent.

Examples of the monomer (a-1) include:

dialkylaminoalkyl (meth)acrylates such as dimethylaminoethyl (meth)acrylate, diethylaminoethyl (meth)acrylate, dipropylaminoethyl (meth)acrylate, dimethylaminopropyl (meth)acrylate, diethylaminopropyl (meth)acrylate, and

dimethylaminobutyl (meth)acrylate;

tertiary amino group-containing (meth)acrylamides such as N,N-dimethyl (meth)acrylamide, N,N-dimethylaminoethyl (meth)acrylamide, N,N-diethylaminoethyl (meth)acrylamide, N,N-dipropylaminoethyl (meth)acrylamide, N,N-dimethylaminopropyl (meth)acrylamide, and N,N-dimethylaminobutyl (meth)acrylamide;

tertiary amino group-containing vinyl ethers such as dimethylaminoethyl vinyl ether, diethylaminoethyl vinyl ether, dimethylaminopropyl vinyl ether, and dimethylaminobutyl vinyl ether; and

tertiary amino group-containing aromatic unsaturated monomers such as vinylpyridine.

As the monomer (a-1), one type may be used, or two or more types may be used.

Among these, the monomer (a-1) is preferably a dialkylaminoalkyl (meth)acrylate, and more preferably dimethylaminoethyl (meth)acrylate or diethylaminoethyl (meth)acrylate from the viewpoint of, for example, stability of the component (A), and reactivity with an epoxy group-containing compound (example: components (C) and (D)).

The amount of the monomer (a-1) used is preferably 1 mass% or more, more preferably 2 mass% or more, and preferably 30 mass% or less, more preferably 20 mass% or less with respect to the total 100 mass% of monomers used in synthesizing the component (A) from the viewpoint that, for example, a composition excellent in drying property and/or curability can be easily obtained, and a coating film excellent in chemical resistance, water resistance, and coating film hardness can be easily formed.

Examples of the monomer (a-2) include:

(meth)acrylates such as methyl (meth)acrylate, ethyl (meth)acrylate, n-propyl (meth)acrylate, isopropyl (meth) acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, isobornyl (meth)acrylate, and alkylene glycol di(meth) acrylates such as ethylene glycol di(meth)acrylate;

hydroxy group-containing (meth)acrylates such as 2-hydroxyethyl (meth)acrylate, hydroxypropyl (meth)acrylate, 4-hydroxybutyl (meth)acrylate, a mono(meth)acrylate of cyclohexanedimethanol, polyoxyalkylene glycol (meth)acrylates such as diethylene glycol (meth)acrylate (the number of carbon atoms in the alkylene group is 2 to 4, and the number of moles of alkylene oxide added is 1 to 50), and caprolactone-modified hydroxy (meth)acrylate;

acid anhydride group-containing unsaturated monomers such as maleic anhydride and itaconic anhydride;

amide group-containing unsaturated monomers such as N-butoxymethyl (meth)acrylamide, (meth)acrylamide, diacetone (meth)acrylamide, and N-methylol (meth)acrylamide;

vinyl group-containing unsaturated monomers such as styrene, vinyl toluene, $\alpha$-methylstyrene, vinyl acetate, and vinyl benzoate;

cyano group-containing unsaturated monomers such as acrylonitrile and methacrylonitrile;

sulfonic acid group-containing unsaturated monomers such as p-styrenesulfonic acid;

sulfonamide group-containing unsaturated monomers such as p-styrenesulfonamide and N-methyl-p-styrenesulfonamide;

fluorine-containing vinyl monomers;

UV-absorbing unsaturated monomers (R-UVA) such as 2-[2'-hydroxy-5'-(methacryloyloxymethyl)phenyl]-2H-benzotriazole and 2-[2'-hydroxy-5'-(methacryloyloxyethyl)phenyl]-2H-benzotriazole; and

photostable unsaturated monomers (R-HALS) such as 4-(meth)acryloyloxy-2,2,6,6-tetramethylpiperidine and 4-(meth)acryloylamino-2,2,6,6-tetramethylpiperidine.

As the monomer (a-2), one type may be used, or two or more types may be used.

Among these, methyl (meth)acrylate, n-butyl (meth)acrylate, and styrene are preferable as the monomer (a-2) from the viewpoint that, for example, a coating film excellent in balance among weather resistance, flexibility (bending resistance), and gloss can be easily formed.

The amount of the monomer (a-2) used is preferably 70 mass% or more, more preferably 80 mass% or more, and preferably 99 mass% or less, more preferably 98 mass% or less with respect to the total 100 mass% of monomers used in synthesizing the component (A) from the viewpoint that, for example, a composition excellent in drying property and/or curability can be easily obtained, and a coating film excellent in chemical resistance, water resistance, and coating film hardness can be easily formed.

The glass transition temperature (Tg) of the component (A) is preferably -5°C or higher, more preferably 0°C or higher, and preferably 50°C or lower, more preferably 40°C or lower from the viewpoint that, for example, a coating film which is excellent in balance between coating film hardness and bending resistance, and is less likely to cause, for example, stickiness and cracking can be easily formed.

In the present invention, the Tg is a value approximately calculated by the following Fox equation described in Fox T.G., Bull. Am. Physics Soc. 1, 3, page 123 (1956).

When the resin contains a constituent unit derived from a monomer having an unknown Tg, such as a monomer

whose Tg ($Tg_n$) is not described in the following literature, and the total amount of constituent units derived from monomers having an unknown Tg is 10 mass% or less, the Tg is calculated using only a monomer having a known Tg, and when the total amount of constituent units derived from monomers having an unknown Tg exceeds 10 mass%, the Tg of the resin can be measured by, for example, differential scanning calorimetry (DSC).

[Math. 1]

$$\frac{1}{Tg} = \frac{X_1}{Tg_1} + \frac{X_2}{Tg_2} + \ldots + \frac{X_n}{Tg_n}$$

In the formula, $X_n$ is a mass percentage (mass%/100) of the monomer n used in synthesizing the component (A) with respect to the total amount of monomers used in synthesizing the component (A), and $Tg_n$ is a glass transition temperature (Kelvin) of a homopolymer of the monomer n.

For $Tg_n$, for example, a value described in Polymer Handbook 2nd Edition, J. Wiley & Sons, New York (1975) can be referred to. According to this handbook, for example, the Tg of polystyrene is 373 K, the Tg of polybutyl methacrylate is 293 K, the Tg of polybutyl acrylate is 219 K, the Tg of poly(2-hydroxyl ethyl methacrylate) is 328 K, and the Tg of polymethacrylic acid is 458 K.

The weight average molecular weight (hereinafter also simply referred to as "Mw") of the component (A) is preferably 1,000 or more, more preferably 3,000 or more, particularly preferably 4,000 or more, and preferably 100,000 or less, more preferably 50,000 or less, particularly preferably 30,000 or less from the viewpoint that, for example, a coating film which is less likely to cause cracking, has excellent bending resistance, and is excellent in weather resistance and chemical resistance can be easily formed.

In the present invention, Mw is a weight average molecular weight in terms of standard polystyrene measured by a gel permeation chromatography (GPC) method, and specifically, can be measured by the method described in the following examples.

The amine value of the solid content of the component (A) is preferably 1 mgKOH/g or more, more preferably 5 mgKOH/g or more, particularly preferably 10 mgKOH/g or more, and preferably 50 mgKOH/g or less, more preferably 40 mgKOH/g or less.

Use of the component (A) having an amine value in the above range enables a composition more excellent in drying property and/or curability to be easily obtained, and enables a coating film excellent in weather resistance and chemical resistance to be easily formed.

From the viewpoint of further reducing the viscosity of the present composition, the amine value of the solid content of the component (A) is preferably 1 mgKOH/g or more, more preferably 5 mgKOH/g or more, and preferably 30 mgKOH/g or less, more preferably 20 mgKOH/g or less.

The amine value can be measured in accordance with JIS K 7237:1995.

The content (solid content) of the component (A) in 100 mass% of the nonvolatile content of the composition 1 is preferably 5 mass% or more, more preferably 10 mass% or more, particularly preferably 15 mass% or more, and preferably 50 mass% or less, more preferably 45 mass% or less, particularly preferably 40 mass% or less.

When the content of the component (A) is within the above range, a coating film which is less likely to cause cracking, and is excellent in balance among weather resistance, curability, adhesion to an epoxy resin-based undercoat coating film, and adhesion between an old coating film and a new coating film can be easily formed.

The nonvolatile content of the present composition (composition 1 or composition 2) means a mass percentage of a coating film (heating residue) after sufficient reaction curing (heating) of the present composition, or the coating film (heating residue) itself. The nonvolatile content can be calculated by weighing 1 ± 0.1 g of the present composition (for example, the composition immediately after mixing the base component and the curing agent) in a flat bottom dish, spreading the composition uniformly using a wire having a known mass, drying the composition at 23°C for 24 hours, and then measuring the heating residue and the mass of the wire when heating is performed at a heating temperature of 108°C for 3 hours (under normal pressure). The nonvolatile content is a value equivalent to the total amount of the solid content (components other than the solvent) of the raw material components used in the present composition.

<Carboxy group-containing resin (B)>

The component (B) is a resin other than the component (AB), that is, a resin free of tertiary amino groups, and is not particularly limited as long as it has at least one carboxy group in one molecule. Further, the component (B) is a resin

other than a component (E) described below.

As the component (B) used in the present composition, one type or two or more types may be used.

Specific examples of the component (B) include a carboxy group-containing acrylic resin (B1), a carboxy group-containing fluororesin (B2), a carboxy group-containing polyester resin, and a carboxy group-containing alkyd resin. Among these, the carboxy group-containing acrylic resin (B1) and the carboxy group-containing fluororesin (B2) are preferable from the viewpoint that, for example, a coating film excellent in balance between weather resistance and chemical resistance can be easily formed, and the carboxy group-containing acrylic resin (B1) is more preferable from the viewpoint of availability.

The Tg of the component (B) is preferably -5°C or higher, more preferably 0°C or higher, and preferably 50°C or lower, more preferably 40°C or lower from the viewpoint that, for example, a coating film which is excellent in balance between coating film hardness and bending resistance, and is less likely to cause, for example, stickiness and cracking can be easily formed.

The Tg can be measured or calculated by a method similar to the method described in the section of the component (A).

The Mw of the component (B) is preferably 1,000 or more, more preferably 3,000 or more, particularly preferably 4,000 or more, and preferably 100,000 or less, more preferably 50,000 or less, particularly preferably 30,000 or less from the viewpoint that, for example, a coating film which is less likely to cause cracking, has excellent bending resistance, and is excellent in weather resistance and chemical resistance can be easily formed.

The acid value of the solid content of the component (B) is preferably 5 mgKOH/g or more, more preferably 10 mgKOH/g or more, and preferably 70 mgKOH/g or less, more preferably 60 mgKOH/g or less.

Use of the component (B) having an acid value in the above range enables a composition more excellent in drying property and/or curability to be easily obtained, and enables a coating film excellent in weather resistance and chemical resistance to be easily formed.

The acid value can be measured in accordance with JIS K 0070:1992.

The content (solid content) of the component (B) in 100 mass% of the nonvolatile content of the composition 1 is preferably 5 mass% or more, more preferably 10 mass% or more, particularly preferably 15 mass% or more, and preferably 50 mass% or less, more preferably 45 mass% or less, particularly preferably 40 mass% or less.

When the content of the component (B) is within the above range, a coating film excellent in adhesion to an epoxy resin-based undercoat coating film and adhesion between an old coating film and a new coating film can be easily formed.

[Carboxy group-containing acrylic resin (B1)]

The component (B1) can be synthesized, for example, through (co)polymerization by a known method using a carboxy group-containing unsaturated monomer. Specifically, the synthesis can be performed by radical (co)polymerization using a carboxy group-containing unsaturated monomer and, if necessary, an unsaturated monomer free of carboxy groups. However, at least one of the monomers used for the (co)polymerization is a compound having a (meth)acryloyl group.

In addition, the component (B1) may be synthesized by radically (co)polymerizing an unsaturated monomer free of carboxy groups (however, as at least one of the monomers, a compound having a (meth)acryloyl group is used), and then performing, for example, modification so that the finally obtained resin has a carboxy group.

The component (B) can be synthesized by a conventional method, and specifically, can be synthesized by allowing a monomer to react in the presence of a polymerization initiator and a solvent.

Examples of the carboxy group-containing unsaturated monomer include (meth)acrylic acid, itaconic acid, maleic acid, fumaric acid, crotonic acid, allyloxypropionic acid, 2-(meth)acryloylethylsuccinic acid, 3-butenoic acid, 4-pentenoic acid, 2-hexenoic acid, 3-hexenoic acid, 5-hexenoic acid, 2-heptenoic acid, 3-heptenoic acid, 3-octenoic acid, 2-nonenoic acid, 3-nonenoic acid, 9-decenoic acid, 10-undecenoic acid, and 2-tridecenoic acid. Among these, (meth)acrylic acid is preferably used.

As the carboxy group-containing unsaturated monomer, one type may be used, or two or more types may be used.

The amount of the carboxy group-containing unsaturated monomer used is preferably 1 mass% or more, more preferably 2 mass% or more, and preferably 30 mass% or less, more preferably 20 mass% or less with respect to the total 100 mass% of monomers used in synthesizing the component (B1) from the viewpoint that, for example, a composition excellent in drying property can be easily obtained, and a coating film excellent in chemical resistance, water resistance, and coating film hardness can be easily formed.

Examples of the unsaturated monomer free of carboxy groups include monomers similar to the monomers exemplified as the monomer (a-2). Among these, methyl (meth)acrylate, n-butyl (meth)acrylate, and styrene are preferably used.

As the unsaturated monomer free of carboxy groups, one type may be used, or two or more types may be used.

The amount of the unsaturated monomer free of carboxy groups used is preferably 70 mass% or more, more preferably 80 mass% or more, and preferably 99 mass% or less, more preferably 98 mass% or less with respect to the total 100 mass% of monomers used in synthesizing the component (B1) from the viewpoint that, for example, a composition excellent in drying property and/or curability can be easily obtained, and a coating film excellent in chemical resistance, water resistance, and coating film hardness can be easily formed.

[Carboxy group-containing fluororesin (B2)]

The component (B2) may be obtained by, for example, synthesis through (co)polymerization by a known method using a fluoroolefin and a carboxy group-containing monomer, or may be a commercially available product. When the component (B2) is synthesized, the component (B2) can be synthesized by, for example, copolymerizing a fluoroolefin (b1) and an unsaturated carboxylic acid having a carboxy group (b2), and further copolymerizing a vinyl ether (b3) and/or a vinyl ester (b4) as necessary.

Examples of the fluoroolefin (b1) include

fluoroethylenes such as $CClF=CF_2$, $CHCl=CF_2$, $CCl_2=CF_2$, $CClF=CClF$, $CHF=CCl_2$, $CH_2=CClF$, $CCl_2=CClF$, $CF_2=CF_2$, and $CF_2=CH_2$;

fluoropropenes such as $CF_2ClCF=CF_2$, $CF_3CCl=CF_2$, $CF_3CF=CFCl$, $CF_2ClCCl=CF_2$, $CF_2ClCF=CFCl$, $CFCl_2CF=CF_2$, $CF_3CCl=CClF$, $CF_3CCl=CCl_2$, $CClF_2CF=CCl_2$, $CCl_3CF=CF_2$, $CF_2ClCCl=CCl_2$, $CFCl_2CCl=CCl_2$, $CF_3CF=CHCl$, $CClF_2CF=CHCl$, $CH_3CCl=CHCl$, $CHF_2CCl=CCl_2$, $CF_2ClCH=CCl_2$, $CF_2ClCCl=CHCl$, $CCl_3CF=CHCl$, $CHBrCF=CCl_2$, and $CF_2=CFOCF_3$; and

fluoroolefins having 4 or more carbon atoms such as $CF_3CCl=CFCF_3$, $CF_2=CFCF_2CClF_2$, $CF_3CF_2CF=CCl_2$, and $CF_2=CFOC_3F_7$.

Among these, perhaloolefins in which all hydrogen atoms of olefins are substituted with halogen, such as $CF_2=CF_2$ and $CClF=CF_2$, are preferable.

As the fluoroolefin (b1), one type may be used, or two or more types may be used.

Examples of the unsaturated carboxylic acid having a carboxy group (b2) include (meth)acrylic acid, itaconic acid, maleic acid, fumaric acid, crotonic acid, allyloxypropionic acid, 2-(meth)acryloylethylsuccinic acid, 3-butenoic acid, 4-pentenoic acid, 2-hexenoic acid, 3-hexenoic acid, 5-hexenoic acid, 2-heptenoic acid, 3-heptenoic acid, 3-octenoic acid, 2-nonenoic acid, 3-nonenoic acid, 9-decenoic acid, 10-undecenoic acid, and 2-tridecenoic acid.

As the unsaturated carboxylic acid having a carboxy group (b2), one type may be used, or two or more types may be used.

Examples of the vinyl ether (b3) include:

aliphatic alkyl vinyl ethers such as methyl vinyl ether, ethyl vinyl ether, propyl vinyl ether, n-butyl vinyl ether, octyl vinyl ether, neopentyl vinyl ether and t-butyl vinyl ether;

alicyclic alkyl vinyl ethers such as cyclohexyl vinyl ether;

aromatic vinyl ethers such as phenyl vinyl ether, benzyl vinyl ether, and naphthyl vinyl ether;

isopropenyl ethers such as methyl isopropenyl ether, ethyl isopropenyl ether, propyl isopropenyl ether, butyl isopropenyl ether, and cyclohexyl isopropenyl ether;

hydroxyalkyl vinyl ethers such as 2-hydroxyethyl vinyl ether, 3-hydroxypropyl vinyl ether, 4-hydroxybutyl vinyl ether, 9-hydroxynonyl vinyl ether, 1-hydroxymethyl-4-vinyloxymethylcyclohexane, and 3-chloro-2-hydroxypropyl vinyl ether; and

hydroxyalkyl isopropenyl ethers such as 2-hydroxyethyl isopropenyl ether, 3-hydroxypropyl isopropenyl ether, 4-hydroxybutyl isopropenyl ether, 9-hydroxynonyl isopropenyl ether, 1-hydroxymethyl-4-isopropenoxymethylcyclohexane, and 3-hydroxy-2-chloropropyl isopropenyl ether.

As the vinyl ether (b3), one type may be used, or two or more types may be used.

Examples of the vinyl ester (b4) include a compound represented by $CH_2=CHOCOR^3$ ($R^3$: an aliphatic, alicyclic, or aromatic monovalent hydrocarbon group having 1 to 20 carbon atoms which may have a substituent).

Examples of the substituent in the $R^3$ include a hydroxy group and a halogen atom, but the substituent is preferably not a hydroxy group.

As the vinyl ester (b4), one type may be used, or two or more types may be used.

Preferred examples of the vinyl ester (b4) include:

fatty acid vinyl esters such as vinyl acetate, vinyl propionate, vinyl butyrate, vinyl isobutyrate, vinyl caproate, vinyl pivalate, vinyl caprylate, and vinyl stearate; and

aromatic carboxylic acid vinyl esters such as vinyl benzoate and vinyl p-t-butylbenzoate.

In the synthesis of the component (B2), other monomers other than the (b1) to (b4) may be used.
Examples of the other monomers include:

olefins such as ethylene, propylene, and isobutylene;
haloolefins such as vinyl chloride and vinylidene chloride;
allyl carboxylates such as allyl formate, allyl butyrate, allyl benzoate, and allyl cyclohexanecarboxylate; and
allyl ethers such as allyl ethyl ether and allyl phenyl ether.

The component (B2) can be synthesized by, for example, the method described in JP H07-238116 A or JP H08-157537 A.

<Tertiary amino group and carboxy group-containing acrylic resin (AB)>

The component (AB) is not particularly limited as long as it has at least one tertiary amino group and at least one carboxy group in one molecule.
As the component (AB) used in the present composition, one type or two or more types may be used.
The component (AB) can be synthesized, for example, through (co)polymerization by a known method using a tertiary amino group-containing unsaturated monomer and a carboxy group-containing unsaturated monomer. Specifically, the synthesis can be performed by radically (co)polymerizing a tertiary amino group-containing unsaturated monomer, a carboxy group-containing unsaturated monomer, and if necessary, an unsaturated monomer free of tertiary amino groups and carboxy groups. However, at least one of the monomers used for the (co)polymerization is a compound having a (meth)acryloyl group.
In addition, the component (AB) may be synthesized by radically (co)polymerizing an unsaturated monomer free of tertiary amino groups and carboxy groups (however, as at least one of the monomers, a compound having a (meth) acryloyl group is used), and then performing, for example, modification so that the finally obtained resin has a tertiary amino group and a carboxy group.
The component (AB) can be synthesized by a conventional method, and specifically, can be synthesized by allowing a monomer to react in the presence of a polymerization initiator and a solvent.
Examples of the tertiary amino group-containing unsaturated monomer include monomers similar to the monomers exemplified as the monomer (a-1) described in the section of the component (A). As the tertiary amino group-containing unsaturated monomer, one type may be used, or two or more types may be used.
Examples of the carboxy group-containing unsaturated monomer include monomers similar to the monomers exemplified as the carboxy group-containing unsaturated monomer described in the section of the component (B). As the carboxy group-containing unsaturated monomer, one type may be used, or two or more types may be used.
The total amount of the tertiary amino group-containing unsaturated monomer and the carboxy group-containing unsaturated monomer used is preferably 1 mass% or more, more preferably 2 mass% or more, and preferably 30 mass% or less, more preferably 25 mass% or less with respect to the total 100 mass% of monomers used in synthesizing the component (AB) from the viewpoint that, for example, a composition excellent in drying property can be easily obtained, and a coating film excellent in chemical resistance, water resistance, and coating film hardness can be easily formed.
Examples of the unsaturated monomer free of tertiary amino groups and carboxy groups include monomers similar to the monomers exemplified as the monomer (a-2) described in the section of the component (A).
As the unsaturated monomer free of tertiary amino groups and carboxy groups, one type may be used, or two or more types may be used.
The amount of the unsaturated monomer free of tertiary amino groups and carboxy groups used is preferably 70 mass% or more, more preferably 75 mass% or more, and preferably 99 mass% or less, more preferably 98 mass% or less with respect to the total 100 mass% of monomers used in synthesizing the component (AB) from the viewpoint that, for example, a composition excellent in drying property and/or curability can be easily obtained, and a coating film excellent in chemical resistance, water resistance, and coating film hardness can be easily formed.
The Tg of the component (AB) is preferably -5°C or higher, more preferably 0°C or higher, and preferably 50°C or lower, more preferably 40°C or lower from the viewpoint that, for example, a coating film which is excellent in balance between coating film hardness and bending resistance, and is less likely to cause, for example, stickiness and cracking can be easily formed.
The Tg can be measured or calculated by a method similar to the method described in the section of the component (A).
The Mw of the component (AB) is preferably 1,000 or more, more preferably 1,500 or more, particularly preferably 2,000 or more, and preferably 100,000 or less, more preferably 50,000 or less, particularly preferably 30,000 or less from

the viewpoint that, for example, a coating film which is less likely to cause cracking, has excellent bending resistance, and is excellent in weather resistance and chemical resistance can be easily formed.

The amine value of the solid content of the component (AB) is preferably 1 mgKOH/g or more, more preferably 5 mgKOH/g or more, particularly preferably 10 mgKOH/g or more, and preferably 50 mgKOH/g or less, more preferably 40 mgKOH/g or less.

Use of the component (AB) having an amine value in the above range enables a composition more excellent in drying property and/or curability to be easily obtained, and enables a coating film excellent in weather resistance and chemical resistance to be easily formed.

From the viewpoint of further reducing the viscosity of the present composition, the amine value of the solid content of the component (AB) is preferably 1 mgKOH/g or more, more preferably 5 mgKOH/g or more, and preferably 30 mgKOH/g or less, more preferably 20 mgKOH/g or less.

The amine value can be measured in accordance with JIS K 7237:1995.

The acid value of the solid content of the component (AB) is preferably 5 mgKOH/g or more, more preferably 10 mgKOH/g or more, and preferably 70 mgKOH/g or less, more preferably 60 mgKOH/g or less.

Use of the component (AB) having an acid value in the above range enables a composition more excellent in drying property and/or curability to be easily obtained, and enables a coating film excellent in weather resistance and chemical resistance to be easily formed.

The acid value can be measured in accordance with JIS K 0070:1992.

The content (solid content) of the component (AB) in 100 mass% of the nonvolatile content of the composition 2 is preferably 10 mass% or more, more preferably 20 mass% or more, particularly preferably 30 mass% or more, and preferably 75 mass% or less, more preferably 70 mass% or less, particularly preferably 60 mass% or less.

When the content of the component (AB) is within the above range, a coating film excellent in adhesion to an epoxy resin-based undercoat coating film and adhesion between an old coating film and a new coating film can be easily formed.

<Epoxy group-containing silane compound (C)>

The component (C) is not particularly limited, and may be any of a monomer, an oligomer, and a polymer as long as it has at least one epoxy group in one molecule, and as the component (C) used in the present composition, one type or two or more types may be used.

Since the component (C) has an epoxy group, a coating film exhibiting the above effect can be formed. On the other hand, when only a compound free of epoxy groups is used, the desired effect is not exhibited.

As the component (C), a compound having an epoxy group and an alkoxy group is preferable, an alkoxy group-containing silane coupling agent having one epoxy group in one molecule is more preferable, and a compound represented by the following formula is particularly preferable from the viewpoint that, for example, a coating film, for example, having more excellent weather resistance can be easily formed. The compound represented by the following formula has a function of chemically bonding a pigment described later and a coating film-forming component such as the components (A), (B), (AB) and (E), and has an effect of improving adhesion of a coating film to be formed to a substrate.

$$X\text{-}SiR_nY_{3-n}$$

n is 0 or 1, X represents an epoxy group, a group resulting from partial substitution of a hydrocarbon group with an epoxy group, or a group resulting from partial substitution of a group, in which a hydrocarbon group is partially substituted with, for example, an ether bond, with an epoxy group, R represents an alkyl group, and Y represents an alkoxy group such as a methoxy group or an ethoxy group.

Examples of the silane compound represented by the above formula include γ-glycidoxyalkylalkyldialkoxysilanes such as γ-glycidoxypropylmethyldimethoxysilane and γ-glycidoxypropylmethyldiethoxysilane; γ-glycidoxyalkyltrialkoxysilanes such as γ-glycidoxypropyltrimethoxysilane and γ-glycidoxypropyltriethoxysilane; 3,4-epoxycyclohexylalkylalkyldialkoxysilanes such as 3,4-epoxycyclohexylethylmethyldimethoxysilane; and 3,4-epoxycyclohexylalkyltrialkoxysilanes such as 3,4-epoxycyclohexylethyltrimethoxysilane, 3,4-epoxycyclohexylethyltriethoxysilane, and 3,4-epoxycyclohexylethyltripropoxysilane, and these may be oligomers or polymers obtained by dehydration condensation thereof.

Examples of the oligomer include compounds having a number average molecular weight (Mn) of preferably 200 or more, more preferably 300 or more, and preferably 2,000 or less, more preferably 1,000 or less.

Examples of the polymer include a compound having an Mw of preferably 3,000 or more, more preferably 5,000 or more, and preferably 50,000 or less, more preferably 30,000 or less.

The content (solid content) of the component (C) in 100 mass% of the nonvolatile content of the present composition is preferably 0.5 mass% or more, more preferably 1.0 mass% or more, particularly preferably 2 mass% or

more, and preferably 30 mass% or less, more preferably 20 mass% or less, particularly preferably 15 mass% or less.

When the content of the component (C) is within the above range, a composition having excellent coating application workability and excellent drying property capable of being cured at ambient temperature can be easily obtained, and a coating film having excellent weather resistance can be easily formed.

<Epoxy resin (D)>

The component (D) is an epoxy resin other than the component (C) and the epoxy group-containing acrylic resin. Examples of the epoxy group-containing acrylic resin include a component (F) described below.

Use of the component (D) together with the components (A) to (C) or the components (AB) and (C) can greatly improve the adhesion to an epoxy resin-based undercoat coating film and the adhesion between an old coating film and a new coating film while maintaining the good weather resistance of a conventional composition. In particular, use of the component (C) and the component (D) in combination enables a coating film excellent in balance between weather resistance and curability to be easily formed.

As the component (D) used in the present composition, one type or two or more types may be used.

It is preferable that the component (D) does not contain a Si atom and does not have a structure derived from a (meth)acryloyl group.

The component (D) is preferably, for example, a polymer or an oligomer containing two or more epoxy groups in the molecule, and a polymer or an oligomer formed by a ring-opening reaction of the epoxy groups. Examples of the component (D) include a bisphenol type epoxy resin, a glycidyl ester type epoxy resin, a glycidyl amine type epoxy resin, a phenol novolac type epoxy resin, and a cresol novolac type epoxy resin.

Among these, a bisphenol type epoxy resin is preferable, a bisphenol A type epoxy resin and a bisphenol F type epoxy resin are more preferable, and a bisphenol A type epoxy resin is particularly preferable from the viewpoint that, for example, a coating film excellent in adhesion to an epoxy resin-based undercoat coating film and adhesion between an old coating film and a new coating film can be easily formed.

In addition, the component (D) is preferably a compound other than a polyglycidyl ether of an aliphatic polyhydric alcohol (example: glycerin polyglycidyl ether and sorbitol polyglycidyl ether), a vinyl-based polymer having an epoxy group in a side chain, and a polyglycidyl ether of polyether polyol (example: polyethylene glycol glycidyl ether).

Examples of the bisphenol A type epoxy resin include polycondensation products of bisphenol A type diglycidyl ethers.

Examples of the bisphenol A type diglycidyl ethers include bisphenol A diglycidyl ether, bisphenol A polypropylene oxide diglycidyl ether, and bisphenol A ethylene oxide diglycidyl ether.

The epoxy equivalent of the component (D) is preferably 150 to 1,000, more preferably 150 to 800, and particularly preferably 180 to 700 from the viewpoint that, for example, the present composition can be made high solid by reducing the viscosity thereof, and a coating film excellent in hardness can be easily formed when the present composition is dried.

The epoxy equivalent is calculated based on JIS K 7236:2001.

The component (D) is preferably an epoxy resin that is liquid or semisolid at ambient temperature from the viewpoint that, for example a coating film more excellent in adhesion to an epoxy resin-based undercoat coating film and adhesion between an old coating film and a new coating film can be easily formed.

The component (D) may be one obtained by synthesis using a conventionally known method, or may be a commercially available product.

Examples of the commercially available product that is liquid at ambient temperature (a temperature of 15 to 25°C, the same applies hereinafter) include "E-028" (manufactured by Ohtake-Meishin Chemical, Co., Ltd., a bisphenol A type epoxy resin, epoxy equivalent: 180 to 190, solid content: 100 mass%), "jER 807" (manufactured by Mitsubishi Chemical Corporation, a bisphenol F type epoxy resin, epoxy equivalent: 160 to 175, solid content: 100 mass%), and "E-028-90X" (manufactured by Ohtake-Meishin Chemical, Co., Ltd. a xylene solution of a bisphenol A type epoxy resin (828 type epoxy resin solution, epoxy equivalent: 200 to 210, solid content: 90 mass%).

Examples of the commercially available product that is semi-solid at ambient temperature include "jER 834" (manufactured by Mitsubishi Chemical Corporation, a bisphenol A type epoxy resin, epoxy equivalent: 230 to 270, solid content: 100 mass%) and "E-834-85X" (manufactured by Ohtake-Meishin Chemical, Co., Ltd., a xylene solution of a bisphenol A type epoxy resin (834 type epoxy resin solution, epoxy equivalent: 270 to 320, solid content: 85 mass%).

Examples of the commercially available product that is solid at ambient temperature include "jER 1001" (manufactured by Mitsubishi Chemical Corporation, a bisphenol A type epoxy resin, epoxy equivalent: 450 to 500, solid content: 100 mass%) and "E-001-75" (manufactured by Ohtake-Meishin Chemical, Co., Ltd., a xylene solution of a bisphenol A type epoxy resin (1001 type epoxy resin solution), epoxy equivalent: 600 to 660, solid content: 75 mass%).

The content (solid content) of the component (D) in 100 mass% of the nonvolatile content of the present composition is preferably 1 mass% or more, more preferably 1.4 mass% or more, particularly preferably 2 mass% or more,

and is preferably 30 mass% or less, more preferably 20 mass% or less, particularly preferably 15 mass% or less.

When the content of the component (D) is within the above range, a coating film more excellent in adhesion to an epoxy resin-based undercoat coating film and adhesion between an old coating film and a new coating film although having excellent weather resistance can be easily formed.

The mass ratio of the content of the component (C) to the content of the component (D) (content of component (C) : content of component (D)) is preferably 1 : 7 to 7 : 1, more preferably 1 : 7 to 1.5 : 1, and still more preferably 1 : 3 to 1.2 : 1.

When the ratio of the contents of the component (C) and the component (D) is within the above range, a coating film more excellent in adhesion to an epoxy resin-based undercoat coating film and adhesion between an old coating film and a new coating film while maintaining good weather resistance can be easily formed.

<Other components>

The present composition may contain other components other than the components (A) to (D), for example, a silicone resin (E), an epoxy group-containing acrylic resin (F), a pigment, a dispersant, an antifoaming agent, a leveling agent, a thickener, an anti-sagging agent (anti-settling agent), a curing accelerator, a light stabilizer, a light absorber (example: ultraviolet absorber), and/or an organic solvent, as necessary, as long as the effects of the present invention are not impaired.

As each of these other components, one type may be used, or two or more types may be used.

The other components may be blended in the base component or may be blended in the curing agent.

It is preferable that the present composition is substantially free of compounds having an isocyanate group from the viewpoint that, for example, a coating composition having low load on the human body and the environment during coating application can be formed.

When a fluororesin is used, it is usual to use a compound having an isocyanate group in order to form an ambient temperature curable coating composition, but according to the present composition, even when the component (B2) is used, an ambient temperature curable coating composition free of compounds having an isocyanate group can be formed.

The phrase "substantially free of compounds having an isocyanate group" means that the content of the compounds having an isocyanate group in 100 mass% of the nonvolatile content of the present composition is 0.001 mass% or less.

[Silicone resin (E)]

The component (E) is a resin having a siloxane bond, and is not particularly limited as long as it is a resin free of epoxy groups, and may be linear or branched.

When the present composition contains the component (E), there is a tendency that a coating film more excellent in weather resistance, coating film hardness, and chemical resistance can be easily formed.

The component (E) may have, for example, a reactive group (example: an amino group and a carboxy group) other than an epoxy group. When a component having a reactive group is used as the component (E), by a reaction of the reactive groups with each other, or a reaction of the reactive group with a reactive group in the components (A), (B), (C), (D) and/or (F), a high molecular weight component can be formed or a three-dimensional crosslinked structure can be formed, and the weather resistance and hardness of the coating film can be improved. The component (E) having such a reactive group can be blended in the curing agent.

The component (E) is preferably a resin represented by the following formula (I).

[Chem. 1]

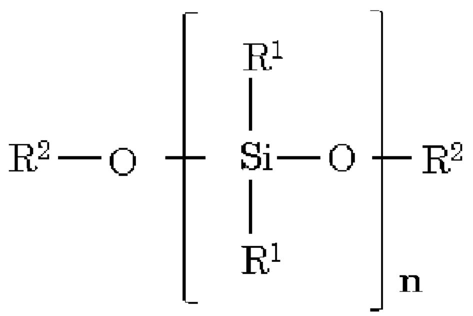

(I)

In the formula (I), $R^1$'s are each independently an alkyl group having 1 to 8 carbon atoms, an aryl group having 6 to 8 carbon atoms, an alkoxy group having 1 to 8 carbon atoms, a group in which a hydrogen atom of such a group is substituted with an amino group and/or a carboxy group, or a reactive group other than an epoxy group; $R^2$'s are each independently an alkyl group having 1 to 8 carbon atoms, an aryl group having 6 to 8 carbon atoms, a group in which a hydrogen atom of such a group is substituted with an amino group and/or a carboxy group, a hydrogen atom, or a reactive group other than an epoxy group; and n represents the number of repetitions.

Examples of the alkyl group having 1 to 8 carbon atoms in the $R^1$ and $R^2$ include a methyl group, an ethyl group, a propyl group, a butyl group, and a pentyl group.

The aryl group having 6 to 8 carbon atoms in the $R^1$ and $R^2$ may be a group having a substituent such as an alkyl group on an aromatic ring, and examples thereof include a phenyl group, a methylphenyl group, and a dimethylphenyl group.

Examples of the alkoxy group having 1 to 8 carbon atoms in the $R^1$ include a methoxy group, an ethoxy group, a propoxy group, and a phenoxy group.

The $R^1$ is preferably a methyl group, an ethyl group, a propyl group, or a phenyl group, and the $R^2$ is preferably a methyl group, an ethyl group, a phenyl group, or a hydrogen atom.

Examples of the reactive group other than an epoxy group in $R^1$ and $R^2$ include an amino group and a carboxy group.

The Mw of the component (E) is preferably 400 or more, more preferably 500 or more, and preferably 10,000 or less, more preferably 7,000 or less from the viewpoint that, for example, a coating film excellent in balance between weather resistance and flexibility (bending resistance) can be easily formed.

The number of repetitions n is preferably selected so that the Mw of the component (E) falls within the above range.

Since the component (E) having an Mw exceeding the upper limit of the above range has a high viscosity, in consideration of handleability, dilution with, for example, an organic solvent described later is often required in order to lower the viscosity of the present composition containing such a component (E). As a result, the solvent content in the present composition increases, and it may not be possible to reduce volatile organic compounds (VOCs) in the present composition.

The component (E) is preferably a resin having weather resistance and water repellency, such as a methyl silicone resin or a methyl phenyl silicone resin, and more preferably contains one or more constituent units selected from the group consisting of a dimethylsiloxane unit (a1), a diphenylsiloxane unit (a2), a methylphenylsiloxane unit (a3), a monomethylsiloxane unit (a4), a monopropylsiloxane unit (a5), and a monophenylsiloxane unit (a6) described below.

[Chem. 2]

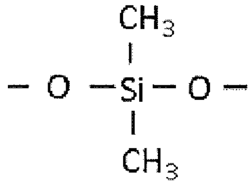
(a 1)

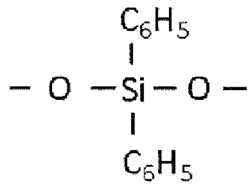
(a 2)

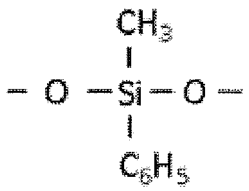
(a 3)

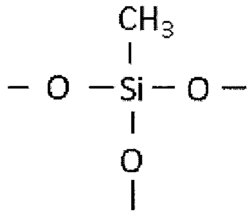
(a 4)

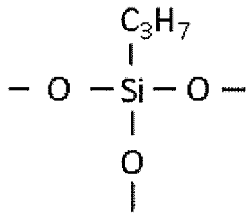
(a 5)

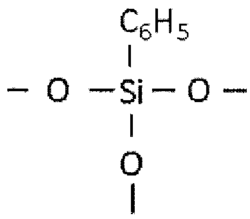
(a 6)

In the formulae (a1) to (a6), "-" that is bonded to O and is not bonded to Si in Si-O- represents a bond, and Si-O- does not necessarily represent Si-O-$CH_3$.

The component (E) may be obtained by synthesis using a conventionally known synthesis method, or may be a commercially available product. Examples of the commercially available product include "Dow Corning 3074 intermediate", "Dow Corning 3055" (manufactured by DuPont Toray Specialty Materials K.K.), "SILRES HP 2000" (manufactured by Wacker Asahikasei Silicone Co., Ltd.), and "Wacker Silicate TES 40 WN" (manufactured by Wacker Asahikasei Silicone Co., Ltd.).

When the present composition contains the component (E), the content (solid content) of the component (E) in 100 mass% of the nonvolatile content of the present composition is preferably 0.5 mass% or more, more preferably 1 mass% or more, particularly preferably 1.3 mass% or more, and preferably 45 mass% or less, more preferably 30 mass% or less, particularly preferably 20 mass% or less from the viewpoint that, for example, a coating film excellent in balance between weather resistance and flexibility (bending resistance) can be easily formed.

[Epoxy group-containing acrylic resin (F)]

The component (F) is not particularly limited as long as it is a resin other than the components (A) to (E) and is an acrylic resin having at least one epoxy group in one molecule.

When the present composition contains the component (F), there is a tendency that a coating film more excellent in flexibility (bending resistance) and gloss can be easily formed.

When the present composition is a two-component type composition that includes a base component containing the components (A) and (B) or a base component containing the component (AB) and that includes a curing agent containing the components (C) and (D), the component (F) is preferably blended in the curing agent.

The component (F) can be synthesized, for example, through (co)polymerization by a known method using an epoxy group-containing unsaturated monomer. Specifically, the synthesis can be performed by radical (co)polymerization using an epoxy group-containing unsaturated monomer and, if necessary, an unsaturated monomer free of epoxy groups. However, at least one of the monomers used for the (co)polymerization is a compound having a (meth)acryloyl group.

In addition, the component (F) may be synthesized by radically (co)polymerizing an unsaturated monomer free of epoxy groups (however, as at least one of the monomers, a compound having a (meth)acryloyl group is used), and then performing, for example, modification so that the finally obtained resin has an epoxy group.

The component (F) can be synthesized by a conventional method.

Examples of the epoxy group-containing unsaturated monomer include glycidyl (meth)acrylate, 3,4-epoxybutyl

(meth)acrylate, 3,4-epoxycyclohexylmethyl (meth)acrylate, 3,4-epoxycyclohexylethyl (meth)acrylate, 3,4-epoxycyclohexylpropyl (meth)acrylate, 4-hydroxybutyl (meth)acrylate glycidyl ether, and allyl glycidyl ether. Among these, glycidyl (meth)acrylate is preferably used.

As the epoxy group-containing unsaturated monomer, one type may be used, or two or more types may be used.

The amount of the epoxy group-containing unsaturated monomer used is preferably 1 mass% or more, more preferably 2 mass% or more, and preferably 40 mass% or less, more preferably 30 mass% or less with respect to the total 100 mass% of monomers used in synthesizing the component (F) from the viewpoint that, for example, a coating film excellent in chemical resistance, water resistance, and coating film hardness can be easily formed.

Examples of the unsaturated monomer free of epoxy groups include monomers similar to the monomers exemplified as the monomer (a-2) described in the section of the component (A).

Among these, methyl (meth)acrylate, n-butyl (meth)acrylate, and styrene are preferably used.

As the unsaturated monomer free of epoxy groups, one type may be used, or two or more types may be used.

The component (F) can be synthesized by, for example, the method described in WO 2014/175246 A.

The Mw of the component (F) is preferably 1,000 or more, more preferably 3,000 or more, and preferably 50,000 or less, more preferably 30,000 or less from the viewpoint that, for example, a coating film excellent in balance between flexibility (bending resistance) and coating film hardness can be easily formed.

When the present composition contains the component (F), the content (solid content) of the component (F) in 100 mass% of the nonvolatile content of the present composition is preferably 1 mass% or more, more preferably 2 mass% or more, and preferably 25 mass% or less, more preferably 20 mass% or less from the viewpoint that, for example, a coating film more excellent in flexibility (bending resistance) and gloss can be easily formed.

[Pigment]

Examples of the pigment include an extender pigment and a coloring pigment, and the pigment may be either organic or inorganic.

When the present composition is a multi-component type composition including a base component and a curing agent, the pigment may be blended in either one of the base component and the curing agent, or may be blended in both, or may be blended in a third agent other than these. When the present composition is a two-component type composition that includes a base component containing the components (A) and (B) or a base component containing the component (AB) and that includes a curing agent containing the components (C) and (D), the pigment is preferably blended in the base component.

When the present composition contains a pigment, the content of the pigment in 100 mass% of the nonvolatile content of the present composition is preferably 20 mass% or more, more preferably 25 mass% or more, and preferably 60 mass% or less, more preferably 50 mass% or less from the viewpoint that, for example, a coating film excellent in weather resistance and flexibility (bending resistance), and having a stress relief effect can be easily formed.

The extender pigment is not particularly limited, and a conventionally known pigment can be used, but a pigment other than the following coloring pigments is used.

Examples of the extender pigment include talc, mica, barium sulfate (including precipitated barium sulfate and ground barium sulfate), (potash) feldspar, kaolin, alumina white, clay, magnesium carbonate, barium carbonate, calcium carbonate, dolomite, silica, glass flakes, and plastic flakes. In particular, talc, silica, (precipitated) barium sulfate, (potash) feldspar, or mica is preferable.

When the present composition contains an extender pigment, the content of the extender pigment in 100 mass% of the nonvolatile content of the present composition is preferably 5 mass% or more, more preferably 10 mass% or more, and preferably 50 mass% or less, more preferably 45 mass% or less from the viewpoint that, for example, a coating film excellent in flexibility (bending resistance) can be easily formed.

The coloring pigment is not particularly limited, and a conventionally known pigment can be used.

As the coloring pigment, for example, conventionally known inorganic pigments such as carbon black, titanium dioxide (titanium white), iron oxide (Bengala), yellow iron oxide, ultramarine, aluminum flakes, scaly iron oxide, and stainless steel flakes, and conventionally known organic pigments such as cyanine blue and cyanine green can be used. In particular, titanium white, carbon black, or Bengala is preferable.

When the present composition contains a coloring pigment, the content of the coloring pigment in 100 mass% of the nonvolatile content of the present composition is preferably 0.1 mass% or more, more preferably 1 mass% or more, and preferably 50 mass% or less, more preferably 45 mass% or less.

[Anti-sagging agent (anti-settling agent)]

As the anti-sagging agent (anti-settling agent), a conventionally known anti-sagging agent (anti-settling agent) such as organic clay-based wax such as a stearate salt, a lecithin salt, or an alkyl sulfonate salt of Al, Ca, or Zn, a

polyethylene wax, an amide wax, a hydrogenated castor oil wax, synthetic fine powder silica, or an oxidized polyethylene-based wax can be used, and among these, an amide wax, synthetic fine powder silica, an oxidized polyethylene-based wax, or an organic clay-based wax is preferable.

When the present composition contains an anti-sagging agent (anti-settling agent), the content of the anti-sagging agent (anti-settling agent) in 100 mass% of the nonvolatile content of the present composition is preferably 0.3 to 10 mass%.

[Light stabilizer]

The light stabilizer is not particularly limited, and examples thereof include conventionally known light stabilizers such as a hindered amine-based light stabilizer.

Examples of the hindered amine-based light stabilizer include bis(1,2,2,6,6-pentamethyl-4-piperidyl) sebacate, methyl (1,2,2,6,6-pentamethyl-4-piperidyl) sebacate, 2,4-bis[N-butyl-N-(1-cyclohexyloxy-2,2,6,6-tetramethylpiperidin-4-yl)amino]-6-(2-hydroxyethylamine)-1,3,5-triazine, and bis(2,2,6,6-tetramethyl-1-(octyloxy)-4-piperidinyl) decanedioate.

As the light stabilizer, a commercially available product may be used, and examples of the commercially available product include "TINUVIN 292", "TINUVIN 144", and "TINUVIN 123" (all manufactured by BASF SE).

When the present composition contains a light stabilizer, the content of the light stabilizer in 100 mass% of the nonvolatile content of the present composition is preferably 0.1 to 5 mass%.

[Organic solvent]

The organic solvent is not particularly limited, and examples thereof include aromatic hydrocarbon-based solvents such as toluene, xylene, "Ipsol 100" (manufactured by Idemitsu Kosan Co., Ltd.), "Swasol 1000" (manufactured by Maruzen Petrochemical Co., Ltd.), "SOLVESSO 100", "SOLVESSO 150" (manufactured by Exxon Mobil Corporation), and "LAWS" (manufactured by Shell plc), ketone-based solvents such as methyl ethyl ketone and methyl isobutyl ketone, ester-based solvents such as butyl acetate, alcohol-based solvents such as isopropanol and benzyl alcohol, and aliphatic hydrocarbon-based solvents such as mineral spirit, n-hexane, n-octane, 2,2,2-trimethylpentane, isooctane, n-nonane, cyclohexane, and methylcyclohexane.

When the present composition contains an organic solvent, the content of the organic solvent in 100 mass% of the present composition is preferably 5 mass% or more, more preferably 10 mass% or more, and preferably 50 mass% or less, more preferably 40 mass% or less.

<Method for preparing present composition>

The present composition, the base component, the curing agent, and others can be prepared by mixing (kneading) respective components to be blended therein. At the time of this mixing (kneading), the respective components may be added and mixed at a time, or may be added and mixed in multiple times. In addition, the components may be mixed while, for example, heating or cooling according to, for example, season and environment.

When the present composition is a two or more-component type composition including a base component and a curing agent, the composition can be prepared by mixing (kneading) the base component, the curing agent, and other agents (example: a third agent) used as necessary.

In the mixing (kneading), a conventionally known mixer, disperser, stirrer, or others can be used, and examples of the mixer, disperser, stirrer, or others include a mixing/dispersing mill, a mortar mixer, a roll, a paint shaker, and a homogenizer.

<<Coating film, and coating film-attached coating target material>>

The coating film according to an embodiment of the present invention (hereinafter also referred to as "present coating film") is formed using the present composition, and a coating film-attached coating target material according to an embodiment of the present invention (hereinafter also referred to as "present coating film-attached coating target material") is a laminate including the present coating film and a coating target material. Such a present coating film-attached coating target material can be produced by, for example, a method including steps [1] and [2] below.

Step [1]: a step of applying the present composition to a coating target material
Step [2]: a step of drying the applied present composition to form a coating film

The present composition may be directly applied to a substrate made of a material such as a steel (such as iron, steel, alloy iron, carbon steel, mild steel, or alloy steel), a nonferrous metal (such as aluminum, copper, brass, zinc plating,

or zinc spraying), or a stainless steel (such as SUS304 or SUS410), but is usually applied to a substrate having, for example, a conventionally known anticorrosive coating film, rust preventive coating film, or another primer coating film.

The coating target material is preferably a substrate having an epoxy resin-based undercoat coating film (particularly, an epoxy resin-based undercoat anticorrosive coating film) from the viewpoint of, for example, further exhibiting the effects of the present invention.

That is, the present coating film-attached coating target material is preferably a laminated coating film-attached substrate including a substrate, an epoxy resin-based undercoat coating film, and the present coating film in this order. Such a laminated coating film-attached substrate can be produced by, for example, a method including the following steps [1'] and [2'].

Step [1']: a step of applying the present composition to a substrate with an epoxy resin-based undercoat coating film formed thereon (preferably a step of applying the following epoxy coating material to a substrate, drying (curing) the applied epoxy coating material to form an epoxy resin-based undercoat coating film, and applying the present composition onto the formed epoxy resin-based undercoat coating film.).

Step [2']: a step of drying the applied present composition to form a coating film

Examples of the substrate made of the above-mentioned material include (large) steel structures such as a ship; land structures such as a bridge, a tank, a plant, and a steel tower; marine structures such as a port facility, a marine buoy, a pipeline, a floating offshore oil and gas production storage and offloading system (FPSO), a floating offshore natural gas liquefaction system (FLNG), an oil drilling rig, an oil storage station, a megafloat, an offshore wind power facility, and a tidal power generation facility. Among these, a substrate required to have weather resistance is preferable, and a ship is more preferable.

The dry film thickness of the present coating film is not particularly limited, and may be appropriately selected according to a desired use, and is usually 15 μm or more, preferably 25 μm or more, and usually 300 μm or less, preferably 200 μm or less from the viewpoint that, for example, a coating film having sufficient weather resistance can be obtained.

The thickness of the epoxy resin-based undercoat coating film is also not particularly limited, and is usually 50 to 500 μm, and is preferably 100 to 350 μm.

The coating application method in the steps [1] and [1'] is not particularly limited, and examples thereof include conventionally known methods such as spray coating application, for example, airless spray coating application and air spray coating application, and coating application using, for example, a brush, a roller, a spatula, or a trowel. Among these, spray coating application is preferable from the viewpoint that, for example, a large-area substrate such as the above structure can be easily coated.

In such coating application, it is preferable to perform coating application such that the dry film thickness of the resulting coating film falls within the above range.

When the present composition is applied, the viscosity of the coating composition may be adjusted to an appropriate value as desired. The description of the present description other than this paragraph relates to, for example, the present composition and an epoxy coating material before dilution.

Before the present composition or the following epoxy coating material is applied, a surface treatment of a coating target material (substrate) may be performed as necessary. Specifically, for example, rust, oil, moisture, or dust that has occurred and adhered to the surface of the coating target material (substrate) to be coated may be cleaned and removed, and further, for example, a sealer, a binder, or a primer may be applied in advance according to, for example, the use or material of the coating target material (substrate).

That is, the coating target material or the substrate include a coating target material or a substrate coated with, for example, a sealer, a binder, or a primer.

When the present composition or the following epoxy coating material is applied, a coating film having a desired film thickness may be formed by coating application once (one-time coating application), or a coating film having a desired film thickness may be formed by coating application twice or more (two or more-time coating application).

Here, the two or more-time coating application is, for example, a method in which a step of forming a dried coating film through the steps [1] and [2] is performed at least once on a coating target material, and then a dried coating film is further formed through the steps [1] and [2] on the dried coating film obtained in the step.

In the step [1'], the present composition may be applied at a certain period (interval) after the epoxy resin-based undercoat coating film is formed, although depending on, for example, the desired use or the situation of the coating site.

The drying conditions in the steps [2] and [2'] are not particularly limited, and may be appropriately set according to, for example, the method for forming a coating film, the type of substrate, the use, or the coating application environment, but the drying temperature is usually 5 to 35°C, more preferably 10 to 30°C in the case of ambient temperature drying. Forced drying (example: 30 to 90°C) may be performed by heating or blowing as desired, but drying and curing are usually performed under natural conditions.

The drying time varies depending on the method for drying the coating film, and in the case of ambient temperature drying, the drying time is usually one day to 7 days, and preferably one day to 3 days.

<Epoxy resin-based undercoat coating film>

The epoxy resin-based undercoat coating film is a coating film formed from an epoxy resin-based coating composition (also referred to as "epoxy coating material"). The epoxy coating material is not particularly limited, and a conventionally known epoxy resin-based coating composition can be used, but it is preferable to contain the following epoxy resin (p) and the following curing agent for an epoxy resin (q) from the viewpoint of, for example, the anticorrosion property and the adhesion to a substrate of an epoxy resin-based undercoat coating film formed from the epoxy coating material.

<Epoxy resin (p)>

The epoxy resin (p) is not particularly limited, and examples thereof include a polymer or an oligomer having two or more epoxy groups in the molecule, and a polymer or an oligomer obtained by a ring-opening reaction of the epoxy groups. Examples of such an epoxy resin include a glycidyl ether type epoxy resin, a glycidyl ester type epoxy resin, a glycidyl amine type epoxy resin, a bisphenol type epoxy resin, a phenol novolac type epoxy resin, a cresol type epoxy resin, a dicyclopentadiene type epoxy resin, an aliphatic type epoxy resin, an alicyclic type epoxy resin, and a fatty acid-modified epoxy resin.

As the epoxy resin (p), one type may be used alone, or two or more types may be used.

Among these, the epoxy resin is preferably a bisphenol type epoxy resin, more preferably one or more selected from bisphenol A type, bisphenol AD type, and bisphenol F type epoxy resins, and particularly preferably a bisphenol A type epoxy resin from the viewpoint that, for example, a coating film excellent in anticorrosion property and adhesion to a substrate can be easily formed.

The weight average molecular weight and the epoxy equivalent of the epoxy resin (p) depend on, for example, the coating application and curing conditions (example: air drying coating application or baking coating application) of the epoxy coating material to be obtained, and are not unconditionally determined, but the weight average molecular weight measured by the GPC method is usually 350 to 20,000, and the epoxy equivalent is usually 150 to 1,000.

The content of the epoxy resin (p) is usually 10 to 60 mass% and is preferably 20 to 50 mass% with respect to 100 mass% of the epoxy coating material containing, for example, a solvent, and is usually 10 to 70 mass%, and is preferably 20 to 60 mass% with respect to 100 mass% of the solid content of the epoxy coating material from the viewpoint that, for example, a coating film excellent in anticorrosion property can be easily formed.

<Curing agent for epoxy resin (q)>

The curing agent for an epoxy resin (q) is not particularly limited, and specific examples thereof include an amine curing agent and an acid anhydride-based curing agent, and an amine curing agent is preferable.

Examples of the amine curing agent include an aliphatic type amine curing agent, an alicyclic type amine curing agent, an aromatic type amine curing agent, a heterocyclic type amine curing agent, other amine curing agents such as polyether diamine, and modified products of these amine curing agents (example: polyamide, polyamidoamine [a polyamide resin], an amine adduct with an epoxy compound, and a Mannich compound [example: Mannich-modified polyamidoamine], a Michael adduct, ketimine, aldimine, and phenalkamine) .

Specific examples of the amine curing agent include curing agents described in JP 2018-44162 A.

As the curing agent (q), one type may be used alone, or two or more types may be used.

The active hydrogen equivalent of the amine curing agent is preferably 50 to 1,000 and more preferably 80 to 400 from the viewpoint that, for example, an epoxy resin-based undercoat coating film excellent in anticorrosion property can be easily formed.

When an amine curing agent is used as the curing agent (q), the epoxy coating material is used in such an amount that the equivalent ratio (amount of amine curing agent used/active hydrogen equivalent)/(amount of epoxy resin used/epoxy equivalent) is preferably 0.20 to 0.9, more preferably 0.25 to 0.75.

Examples of the acid anhydride-based curing agent include phthalic anhydride, tetrahydrophthalic anhydride, methyltetrahydrophthalic anhydride, 3,6-endomethylenetetrahydrophthalic anhydride, hexachloroendomethylenetetrahydrophthalic anhydride, and methyl-3,6-endomethylenetetrahydrophthalic anhydride.

<Additive>

The epoxy coating material may contain an additive such as a curing accelerator, a pigment, an anti-sagging agent (anti-settling agent), an antifoaming agent, or a solvent in addition to the epoxy resin (p) and the curing agent (q), and preferably contains a pigment from the viewpoint of, for example, price, or adhesion of a resulting coating film to a substrate.

As the additive, a component similar to the component described in the section of other components in the present composition can be used.

As each of these additives, one type may be used alone, or two or more types may be used.

The volume percentage (VS) of solid content in the epoxy coating material, determined in accordance with ISO 3233, is preferably 50 to 100%, more preferably 55 to 90%, and particularly preferably 60 to 85%.

Examples

An embodiment of the present invention will be described in more detail with reference to examples, but the present invention is not limited thereto.

[Production Example 1] <Synthesis of tertiary amino group-containing acrylic resin>

In a reactor, 41.5 parts by mass of xylene as a solvent was charged, and the temperature was raised to 110°C under a nitrogen stream. Thereafter, a mixed liquid of 100 parts by mass of a mixed liquid of monomer components (styrene: 38.0 parts by mass, n-butyl methacrylate: 37.0 parts by mass, n-butyl acrylate: 15.0 parts by mass, and dimethylaminoethyl methacrylate: 10.0 parts by mass) and 4.2 parts by mass of 2,2'-azobis(2-methylbutyronitrile) as an initiator was added dropwise to the reactor over 3 hours while maintaining the temperature of the reactor at 110°C. After the dropwise addition, the mixture was kept at the same temperature for 2 hours to synthesize a tertiary amino group-containing acrylic resin.

[Production Example 2] <Synthesis of carboxy group-containing acrylic resin>

In a reactor, 29.4 parts by mass of xylene and 12.6 parts by mass of n-butanol as solvents were charged, and the temperature was raised to 115°C under a nitrogen stream. Thereafter, a mixed liquid of 100 parts by mass of a mixed liquid of monomer components (styrene: 38.0 parts by mass, methyl methacrylate: 5.0 parts by mass, n-butyl acrylate: 50.0 parts by mass, and methacrylic acid: 7.0 parts by mass) and 3.0 parts by mass of t-butylperoxy-2-ethylhexanoate and 0.8 parts by mass of t-butylperoxybenzoate as an initiator were added dropwise to the reactor over 4 hours while maintaining the temperature of the reactor at 115°C. After the dropwise addition, the mixture was kept at the same temperature for 4 hours to synthesize a carboxy group-containing acrylic resin.

[Production Example 3] <Synthesis of epoxy group-containing acrylic resin>

In a reactor, 42.0 parts by mass of xylene as a solvent was charged, and the temperature was raised to 120°C under a nitrogen stream. Thereafter, a mixed liquid of 100 parts by mass of a mixed liquid of monomer components (styrene: 35.0 parts by mass, methyl methacrylate: 20.5 parts by mass, n-butyl acrylate: 29.5 parts by mass, and glycidyl methacrylate: 15.0 parts by mass) and 5.0 parts by mass of 2,2'-azobis(2-methylbutyronitrile) as an initiator was added dropwise to the reactor over 3 hours while maintaining the temperature of the reactor at 120°C. Subsequently, 0.5 parts by mass of t-butylperoxy-2-ethylhexanoate was added to the reactor, and the mixture was kept at the same temperature for 2 hours to synthesize an epoxy group-containing acrylic resin.

<Weight average molecular weight (Mw)>

The Mw of raw materials used in the following examples and comparative examples in terms of standard polystyrene was measured under the following conditions using GPC. The measurement conditions are as follows.

· GPC conditions
· Apparatus: "Alliance 2695" (manufactured by Waters Corporation)
· Column: one "TSKgel SuperH 4000" column and two "TSKgel SuperH 2000" columns are connected (all manufactured by TOSOH CORPORATION, inner diameter 6 mm × length 15 cm)
· Eluent: 99% of tetrahydrofuran (Stabilized whith BHT)
· Flow rate: 0.6 ml/min
· Detector: "RI-104" (manufactured by Shodex Co., Ltd.)
· Column thermostat temperature: 40°C
· Standard substance: standard polystyrene
· Sample preparation method: Raw materials used in the following examples and comparative examples are weighed in a sample tube, and diluted about 100 times by adding tetrahydrofuran thereto.

<Glass transition temperature (Tg)>

The glass transition temperature (Tg) of raw materials used in the following examples and comparative examples was calculated by the Fox equation.

[Examples 1 to 18 and Comparative Examples 1 to 4]

In a plastic container, respective components constituting a base component shown in Tables 1 and 2 were placed according to the amounts (numerical values) shown in Tables 1 and 2, and stirred using a high speed disperser. Then, an appropriate amount of glass beads was placed and dispersed with a paint shaker for 2 hours. Subsequently, the glass beads were removed to prepare a base component.

In addition, respective components constituting a curing agent shown in Tables 1 and 2 were added to a container according to the amounts (numerical values) shown in Tables 1 and 2, and sufficiently dispersed using a high speed disperser to prepare a curing agent.

At the time of coating application, the prepared base component and curing agent were mixed to prepare a coating composition.

The numerical values for the respective components in Tables 1 and 2 are expressed in parts by mass. Note that Table 3 shows the description of each component shown in Tables 1 and 2.

<Adhesion to undercoat coating film>

A blasted steel plate having dimensions of 150 mm × 70 mm × 1.6 mm (thickness) was prepared.

BANNOH 1500 (manufactured by CHUGOKU MARINE PAINTS, LTD.) was applied to the surface of the steel plate using an air spray so as to have a dry film thickness of 200 μm, and dried at 23°C for 1 day to form an undercoat coating film.

The steel plate on which the undercoat coating film was formed was exposed outdoors for 60 days. A deposit on the surface of the undercoat coating film after the outdoor exposure was removed with a dry brush, and each of the coating compositions of examples and comparative examples was applied onto the undercoat coating film from which the deposit was removed using an applicator (gap: 0.3 mm) and dried at 23°C for 7 days to prepare a topcoat coating film-attached steel plate (test plate).

The prepared test plate was exposed outdoors for 6 months, and a cross-cut (size of one square: 2 mm × 2 mm, total number of squares: 25) was made in the coating film on the test plate after the outdoor exposure at a depth reaching the undercoat coating film, and the adhesion between the undercoat coating film and the topcoat coating film was evaluated in accordance with JIS K 5600-5-6:1999 "Adhesion test (Cross-cut test)". The evaluation was made based on the ratio of the total area of the peeled places of the topcoat coating film from the undercoat coating film (peeled area%) to the total area (100%) of the 25 squares. The smaller the ratio of the area of the peeled place is, the more excellent the adhesion to the undercoat coating film is. The results are shown in Tables 1 and 2.

<Weather resistance>

An alodine-treated aluminum plate having dimensions of 150 mm × 70 mm × 0.8 mm (thickness) was prepared. Each of the coating compositions of examples and comparative examples was applied to the surface of the aluminum plate using an applicator (gap: 0.3 mm), and dried at 23°C for 7 days to prepare a weather resistance test plate.

A 1,500-hour weather resistance test was performed on the prepared weather resistance test plate using a Super Xenon Weather Meter SX75 (manufactured by Suga Test Instruments Co., Ltd.).

Thereafter, the reflectance (gloss 60°) of light incident at an angle of 60° from the vertical direction of the surface of the coating film after the weather resistance test was measured using a gloss meter (model: manufactured by BYK-Gardner GmbH), and the gloss retention (%) with respect to the value of the gloss 60° of the coating film before the weather resistance test was performed was calculated. The weather resistance of the coating film was evaluated based on the value of the gloss retention. The higher the gloss retention is, the more excellent the weather resistance of the coating film is. The results are shown in Tables 1 and 2.

<Re-applicability onto old coating film>

A blasted steel plate having dimensions of 150 mm × 70 mm × 1.6 mm (thickness) was prepared.

BANNOH 1500 (manufactured by CHUGOKU MARINE PAINTS, LTD.) was applied to the surface of the steel plate using an air spray so as to have a dry film thickness of 200 μm, and dried at 23°C for 1 day to form an undercoat coating film.

Each of the coating compositions of examples and comparative examples was applied onto the undercoat coating film using an air spray so as to have a dry film thickness of 50 μm, and dried at 23°C for 1 day to form a topcoat coating film.

The steel plate on which the topcoat coating film was formed was exposed outdoors for 1 year. The surface of the topcoat coating film after outdoor exposure was washed with tap water and dried at room temperature to prepare an old coating film-attached steel plate.

Subsequently, the same coating composition as the coating composition used for forming the old coating film was applied onto the old coating film of the prepared old coating film-attached steel plate using an applicator (gap: 0.3 mm), and dried at 23°C for 7 days to prepare a new coating film-attached steel plate (test plate).

The prepared test plate was exposed outdoors for 6 months, and a cross-cut (size of one square: 2 mm × 2 mm, total number of squares: 25) was made in the coating film on the test plate after the outdoor exposure at a depth reaching the undercoat coating film, and the adhesion between the old coating film and the new coating film was evaluated in accordance with JIS K 5600-5-6:1999 "Adhesion test (Cross-cut test)". The evaluation was made based on the ratio of the total area of the peeled places of the new coating film from the old coating film (peeled area%) to the total area (100%) of the 25 squares. The smaller the ratio of the area of the peeled place is, the more excellent the re-applicability onto the old coating film is. The results are shown in Tables 1 and 2.

<Curability>

A blasted steel plate having dimensions of 150 mm × 70 mm × 1.6 mm (thickness) was prepared.

BANNOH 1500 (manufactured by CHUGOKU MARINE PAINTS, LTD.) was applied to the surface of the steel plate using an air spray so as to have a dry film thickness of 200 μm, and dried at 23°C for 1 day to form an undercoat coating film.

Each of the coating compositions of examples and comparative examples was applied onto the undercoat coating film using an air spray so as to have a dry film thickness of 50 μm, and dried at 23°C for 7 days to form a topcoat coating film.

Thereafter, the hardness of the topcoat coating film was measured in accordance with JIS K 5600-5-4:1999 "Scratch hardness (Pencil method)", and the hardness of the topcoat coating film was evaluated. The results are shown in Tables 1 and 2.

[Table 1]

Table 1

| | | Example | | | | | | | | |
|---|---|---|---|---|---|---|---|---|---|---|
| | | 1 | 2 | 3 | 4 | 5 | 6 | 7 | 8 | 9 |
| Base component | Tertiary amino group-containing acrylic resin | 25 | 25 | 25 | 25 | 25 | 25 | 25 | 25 | 25 |
| | Carboxy group-containing acrylic resin | 25 | 25 | 25 | 25 | 25 | 25 | 25 | 25 | 25 |
| | Tertiary amino group and carboxy group-containing acrylic resin | | | | | | | | | |
| | White pigment | 25 | 25 | 25 | 25 | 25 | 25 | 25 | 25 | 25 |
| | Anti-sagging agent | 5 | 5 | 5 | 5 | 5 | 5 | 5 | 5 | 5 |
| | Xylene | 10 | 10 | 10 | 10 | 10 | 10 | 10 | 10 | 10 |
| | Light stabilizer | | | | | | | | | |
| | Total | 90 | 90 | 90 | 90 | 90 | 90 | 90 | 90 | 90 |

(continued)

| | | Example | | | | | | | | |
|---|---|---|---|---|---|---|---|---|---|---|
| | | 1 | 2 | 3 | 4 | 5 | 6 | 7 | 8 | 9 |
| Curing agent | Silicone resin | | | | | | | | | 1 |
| | Epoxy group-containing silane compound | 4 | 7 | 6 | 2 | 1 | 1 | 2 | 1 | 4 |
| | Epoxy resin | 4 | 1 | 2 | 6 | 7 | 3 | 4 | 1 | 4 |
| | Epoxy group-containing acrylic resin | | | | | | 4 | 2 | 6 | |
| | Xylene | 2 | 2 | 2 | 2 | 2 | 2 | 2 | 2 | 1 |
| | Total | 10 | 10 | 10 | 10 | 10 | 10 | 10 | 10 | 10 |
| Total of coating composition | | 100 | 100 | 100 | 100 | 100 | 100 | 100 | 100 | 100 |
| Evaluation | Adhesion to undercoat coating film (peeled area %) | 0.8 | 4.5 | 4 | 0.5 | 0.2 | 1 | 0.9 | 5 | 0.8 |
| | Weather resistance (gloss retention %) | 90.6 | 93.5 | 91.6 | 82.5 | 80.8 | 91.2 | 90.5 | 92.6 | 91.8 |
| | Re-applicability onto old coating film (peeled area %) | 0.5 | 2.9 | 0.8 | 0.4 | 0.2 | 1 | 0.9 | 1 | 0.7 |
| | Curability (pencil hardness) | B | 2H | 2H | 2B | 2B | B | B | B | B |

Table 1 (continued)

| | | Example | | | | | | | | |
|---|---|---|---|---|---|---|---|---|---|---|
| | | 10 | 11 | 12 | 13 | 14 | 15 | 16 | 17 | 18 |
| Base component | Tertiary amino group-containing acrylic resin | 25 | 25 | 25 | 25 | 25 | 25 | | | 25 |
| | Carboxy group-containing acrylic resin | 25 | 25 | 25 | 25 | 25 | 25 | | | 25 |
| | Tertiary amino group and carboxy group-containing acrylic resin | | | | | | | 50 | 50 | |
| | White pigment | 25 | 25 | 25 | 25 | 25 | 25 | 25 | 25 | 25 |
| | Anti-sagging agent | 5 | 5 | 5 | 5 | 5 | 5 | 5 | 5 | 5 |
| | Xylene | 10 | 10 | 10 | 10 | 10 | 10 | 10 | 10 | 9 |
| | Light stabilizer | | | | | | | | | 1 |
| | Total | 90 | 90 | 90 | 90 | 90 | 90 | 90 | 90 | 90 |

(continued)

| | | Example | | | | | | | | |
|---|---|---|---|---|---|---|---|---|---|---|
| | | 10 | 11 | 12 | 13 | 14 | 15 | 16 | 17 | 18 |
| Curing agent | Silicone resin | 2 | 2 | 2 | 2 | 2 | 2 | | | |
| | Epoxy group-containing silane compound | 7 | 6 | 4 | 2 | 1 | 1 | 4 | 3 | 4 |
| | Epoxy resin | 1 | 2 | 4 | 6 | 7 | 3 | 4 | 5 | 4 |
| | Epoxy group-containing acrylic resin | | | | | | 4 | | | |
| | Xylene | | | | | | | 2 | 2 | 2 |
| | Total | 10 | 10 | 10 | 10 | 10 | 10 | 10 | 10 | 10 |
| Total of coating composition | | 100 | 100 | 100 | 100 | 100 | 100 | 100 | 100 | 100 |
| Evaluation | Adhesion to undercoat coating film (peeled area %) | 5 | 4 | 0.8 | 0.5 | 0.2 | 1 | 0.8 | 0.6 | 0.8 |
| | Weather resistance (gloss retention %) | 94.7 | 93.1 | 92.7 | 90.6 | 84.8 | 92.5 | 83.5 | 81.7 | 96.4 |
| | Re-applicability onto old coating film (peeled area %) | 3.5 | 2 | 1.8 | 0.6 | 0.4 | 1.6 | 0.5 | 0.4 | 0.5 |
| | Curability (pencil hardness) | 2H | 2H | HB | B | B | B | 2B | 2B | B |

[Table 2]

| | | Comparative Example | | | |
|---|---|---|---|---|---|
| | | 1 | 2 | 3 | 4 |
| Base component | Tertiary amino group-containing acrylic resin | 25 | 25 | 25 | 25 |
| | Carboxy group-containing acrylic resin | 25 | 25 | 25 | 25 |
| | Tertiary amino group and carboxy group-containing acrylic resin | | | | |
| | White pigment | 25 | 25 | 25 | 25 |
| | Anti-sagging agent | 5 | 5 | 5 | 5 |
| | Xylene | 10 | 10 | 10 | 10 |
| | Light stabilizer | | | | |
| | Total | 90 | 90 | 90 | 90 |
| Curing agent | Silicone resin | | | 2 | |
| | Epoxy group-containing silane compound | 8 | 4 | | |
| | Epoxy resin | | | | 8 |
| | Epoxy group-containing acrylic resin | | 4 | 8 | |
| | Xylene | 2 | 2 | | 2 |
| | Total | 10 | 10 | 10 | 10 |
| Total of coating composition | | 100 | 100 | 100 | 100 |

(continued)

| | | Comparative Example | | | |
|---|---|---|---|---|---|
| | | 1 | 2 | 3 | 4 |
| Evaluation | Adhesion to undercoat coating film (peeled area %) | 30 | 90 | 90 | 0.2 |
| | Weather resistance (gloss retention %) | 94.1 | 92.4 | 93.3 | 75.5 |
| | Re-applicability onto old coating film (peeled area %) | 30 | 5 | 30 | 0.2 |
| | Curability (pencil hardness) | 2H | 2B | 4B | 6B |

[Table 3]

| Name of raw material | Remarks |
|---|---|
| Tertiary amino group-containing acrylic resin | Resin synthesized in Production Example 1 (Tg: 30°C, Mw: 6,000, amine value: 26.4 mgKOH/g, solid content: 70 mass%) |
| Carboxy group-containing acrylic resin | Resin synthesized in Production Example 2 (Tg: 6°C, Mw: 16,000, acid value: 29.7 mgKOH/g, solid content: 70 mass%) |
| Tertiary amino group and carboxy group-containing acrylic resin | Paraloid AE-1285 (manufactured by The Dow Chemical Company, Tg: 6°C, solid content: 70 mass%) |
| White pigment | Ti-Pure R-960 (manufactured by The Chemours Company, titanium oxide, solid content: 100 mass%) |
| Anti-sagging agent | DISPARLON A630-20X (manufactured by Kusumoto Chemicals, Ltd., polyamide wax, solid content: 20 mass%) |
| Light stabilizer | TINUVIN 292 (manufactured by BASF SE, HALS, solid content: 100 mass%) |
| Silicone resin | WACKER Silicate TES 40 WN (manufactured by Wacker Asahikasei Silicone Co., Ltd., solid content: 100 mass%) |
| Epoxy group-containing silane compound | KBM-403 (manufactured by Shin-Etsu Chemical Co., Ltd., solid content: 100 mass%) |
| Epoxy resin | E-028 (manufactured by Ohtake-Meishin Chemical, Co., Ltd., epoxy equivalent: 180 to 190, solid content: 100 mass%) |
| Epoxy group-containing acrylic resin | Resin synthesized in Production Example 3 (Tg: 30°C, Mw: 9,000, solid content: 70 mass%) |

## Claims

1. A coating composition

   comprising a tertiary amino group-containing acrylic resin (A) and a carboxy group-containing resin (B), or comprising a tertiary amino group and carboxy group-containing acrylic resin (AB), and
   comprising an epoxy group-containing silane compound (C) and an epoxy resin (D) other than an epoxy group-containing acrylic resin.

2. The coating composition according to claim 1, wherein a silane compound (C) content : an epoxy resin (D) content, which is a mass ratio of a content of the epoxy group-containing silane compound (C) to a content of the epoxy resin (D), is 1 : 7 to 7 : 1.

3. The coating composition according to claim 1 or 2, further comprising a silicone resin (E).

4. The coating composition according to any one of claims 1 to 3, wherein the coating composition is applied onto an epoxy resin-based undercoat coating film.

**5.** A coating film formed from the coating composition according to any one of claims 1 to 4.

**6.** A laminated coating film-attached substrate comprising a substrate, an epoxy resin-based undercoat coating film, and the coating film according to claim 5 in this order.

**7.** A method for producing a laminated coating film-attached substrate, comprising steps [1] and [2] below:

[1] a step of applying the coating composition according to any one of claims 1 to 4 to a substrate with an epoxy resin-based undercoat coating film formed thereon; and
[2] a step of drying the applied coating composition to form a coating film.

## INTERNATIONAL SEARCH REPORT

International application No.
**PCT/JP2023/026380**

**A. CLASSIFICATION OF SUBJECT MATTER**

***C09D 133/14***(2006.01)i; ***B05D 1/36***(2006.01)i; ***B05D 7/24***(2006.01)i; ***B32B 27/30***(2006.01)i; ***C09D 7/63***(2018.01)i; ***C09D 163/00***(2006.01)i; ***C09D 183/04***(2006.01)i; ***C09D 201/08***(2006.01)i

FI: C09D133/14; C09D201/08; C09D163/00; C09D7/63; C09D183/04; B05D7/24 302P; B05D7/24 302U; B05D1/36 Z; B32B27/30 A

According to International Patent Classification (IPC) or to both national classification and IPC

**B. FIELDS SEARCHED**

Minimum documentation searched (classification system followed by classification symbols)

C09D133/14; B05D1/36; B05D7/24; B32B27/30; C09D7/63; C09D163/00; C09D183/04; C09D201/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-127728 A (DAINIPPON INK & CHEM INC) 16 June 1986 (1986-06-16) claims, p. 2, lower left column, p. 7, lower left column to lower right column, examples | 1-3, 5 |
| Y | claims, p. 2, lower left column, p. 7, lower left column to lower right column, examples | 3 |
| A | claims, p. 2, lower left column, p. 7, lower left column to lower right column, examples | 4, 6-7 |
| X | JP 09-310045 A (DAINIPPON INK & CHEM INC) 02 December 1997 (1997-12-02) claims, examples | 1-3, 5 |
| Y | claims, paragraph [0270], examples | 3-4, 6-7 |
| X | JP 08-333440 A (DAINIPPON INK & CHEM INC) 17 December 1996 (1996-12-17) claims, examples | 1-3, 5 |
| Y | claims, examples | 3 |
| A | claims, examples | 4, 6-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 October 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/026380

C. DOCUMENTS CONSIDERED TO BE RELEVANT

| Category* | Citation of document, with indication, where appropriate, of the relevant passages | Relevant to claim No. |
|---|---|---|
| Y | JP 2021-155597 A (CHUGOKU MARINE PAINTS) 07 October 2021 (2021-10-07) paragraph [0066] | 3 |
| A | paragraph [0066] | 1-2, 4-7 |
| Y | JP 09-220525 A (DAINIPPON INK & CHEM INC) 26 August 1997 (1997-08-26) claims, paragraphs [0297]-[0304], [0380], [0425]-[0426], examples | 4, 6-7 |
| A | claims, paragraphs [0297]-[0304], [0380], [0425]-[0426], examples | 1-3, 5 |

Form PCT/ISA/210 (second sheet) (January 2015)

**INTERNATIONAL SEARCH REPORT**
**Information on patent family members**

International application No.
**PCT/JP2023/026380**

| Patent document cited in search report | Publication date (day/month/year) | Patent family member(s) | Publication date (day/month/year) |
|---|---|---|---|
| JP 61-127728 A | 16 June 1986 | (Family: none) | |
| JP 09-310045 A | 02 December 1997 | (Family: none) | |
| JP 08-333440 A | 17 December 1996 | (Family: none) | |
| JP 2021-155597 A | 07 October 2021 | (Family: none) | |
| JP 09-220525 A | 26 August 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021155597 A
- JP H07238116 A
- JP H08157537 A
- WO 2014175246 A
- JP 2018044162 A

### Non-patent literature cited in the description


- **FOX T.G.** *Bull. Am. Physics Soc.*, 1956, vol. 1 (3), 123
- Polymer Handbook. J. Wiley & Sons, 1975